# EUROPEAN PATENT APPLICATION

(11) **EP 3 930 171 A1**
(43) Date of publication of application: **29.12.2021**
(21) Application number: 20275111.1
(22) Date of filing: 22.06.2020
(51) Int. Cl.: H02M 7/483, H02M 1/32, H02M 1/34

(54) **MODULE**

(71) Applicant: General Electric Technology GmbH, 5400 Baden (CH)
(72) Inventor: Outram, John, Stafford, ST16 1WS (GB); Xu, Tianning, Stafford, ST16 1WS (GB)
(74) Representative: Potter Clarkson

(57) **Abstract**

There is provided a module (50,150) for a voltage source converter. The module (50,150) comprises:
an energy storage limb (52) including a plurality of series-connected energy storage devices (58A,58B);
a switching limb (54) connected in parallel with the energy storage limb (52), the switching limb (54) including first and second series-connected module switching element groups, the first module switching element group including a plurality of first module switching elements (60A,60B), the second module switching element group including a plurality of second module switching elements (64A,64B), a first intermediate point of the plurality of first module switching elements (60A,60B) defining a first connection terminal (62), a second intermediate point of the plurality of second module switching elements (64A,64B) defining a second connection terminal (66), the module switching elements (60A,60B,64A,64B) and the energy storage devices (58A,58B) arranged to be combinable to selectively provide a voltage source to the first and second connection terminals (62,66);
a first junction (68A) separating the plurality of series-connected energy storage devices (58A,58B), a second junction (68B) separating the first and second series-connected module switching element groups; and
an energy dissipation or absorption limb (56) operably connected between the first and second junctions (68A,68B), the energy dissipation or absorption limb (56) including at least one energy dissipation or absorption element, wherein the module switching elements (60A,60B,64A,64B) are configurable to selectively direct a module current (76) to flow through the energy dissipation or absorption limb (56).

## Description

This invention relates to a module for a voltage source converter, a voltage source converter and a method of operating a module for a voltage source converter.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power is also transmitted directly from offshore wind parks to onshore AC power transmission networks.

The conversion between DC power and AC power is utilized where it is necessary to interconnect DC and AC networks. In any such power transmission network, converters (i.e. power converters) are required at each interface between AC and DC power to affect the required conversion from AC to DC or from DC to AC.

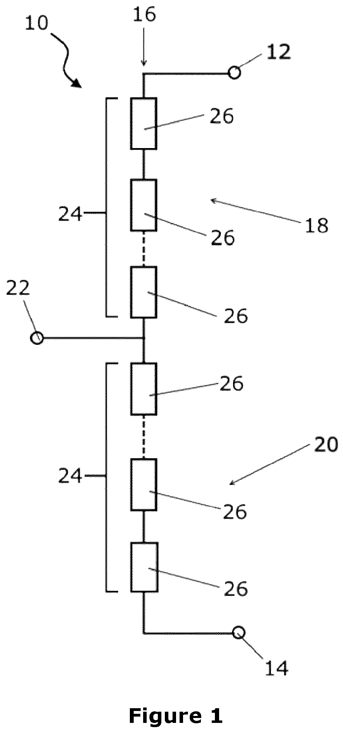

One type of power converter is a voltage source converter 10, as shown schematically in Figure 1, although other types of power converter are also possible.

The voltage source converter 10 includes first and second DC terminals 12, 14, between which extends a converter limb 16. Other voltage source converters may include more than one converter limb and, in particular, may include three converter limbs each of which corresponds to a given phase of a three-phase electrical power system.

The converter limb 16 includes first and second limb portions 18, 20 which are separated by an AC terminal 22.

In use the first and second DC terminals 12, 14 are connected to a DC network, and the AC terminal 22 is connected to an AC network.

Each limb portion 18, 20 includes a chain-link converter 24 which extends between the AC terminal 22 and a corresponding one of the first or the second DC terminal 12, 14. Each chain-link converter 24 includes a plurality of series connected chain-link modules 26.

Each chain-link module 26 includes a number of switching elements 28 which are connected in parallel with an energy storage device 30 in the form of a capacitor 32. Other types of energy storage device 30, i.e. any device that is capable of storing and releasing energy to selectively provide a voltage, e.g. a fuel cell or battery, may also be used however.

Each switching element 28 includes a semiconductor device 34, typically in the form of an Insulated Gate Bipolar Transistor (IGBT).

It is, however, possible to use other types of self-commutated semiconductor devices, such as a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. In addition, one or more of the semiconductor devices 34 may instead include a wide-bandgap material such as, but not limited to, silicon carbide, boron nitride, gallium nitride and aluminium nitride.

The number of semiconductor devices 34 in each switching element 28 may vary depending on the required voltage and current ratings of that switching element 28.

Each of the switching elements 28 also includes a passive current check element that is connected in anti-parallel with a corresponding semiconductor device 34. The or each passive current check element may include at least one passive current check device. The or each passive current check device may be any device that is capable of limiting current flow in only one direction, e.g. a diode 36. The number of passive current check devices in each passive current check element may vary depending on the required voltage and current ratings of that passive current check element.

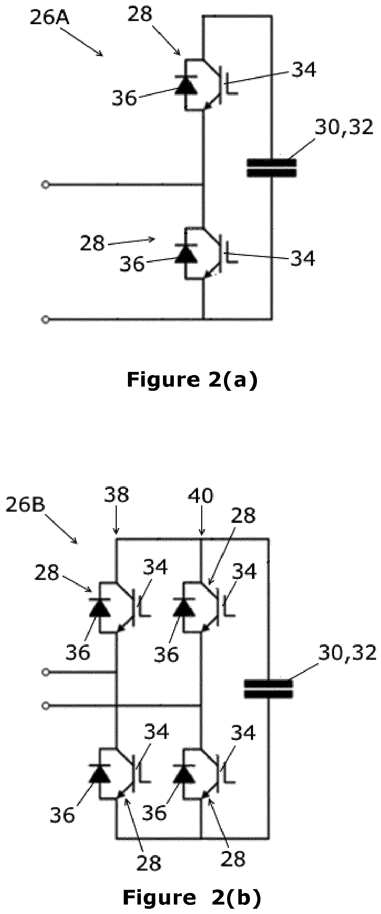

Figure 2(a) shows a schematic view of a first exemplary chain-link module 26A in which a first pair 38 of switching elements 28 is connected in parallel with a capacitor 32 in a known half-bridge arrangement to define a 2-quadrant unipolar module. Switching of the switching elements 28 selectively directs current through the capacitor 32 or causes current to bypass the capacitor 32, such that the first exemplary chain-link module 26A can provide zero or positive voltage and can conduct current in two directions.

Figure 2(b) shows a schematic view of a second exemplary chain-link module 26B in which first and second pairs 38, 40 of switching elements 28 and a capacitor 32 are connected in a known full bridge arrangement to define a 4-quadrant bipolar module. In a similar manner to the first exemplary chain-link module 26A, switching of the switching elements 28 again selectively directs current through the capacitor 32 or causes current to bypass the capacitor 32 such that the second exemplary chain-link module 26B can provide zero, positive or negative voltage and can conduct current in two directions.

Each chain-link converter 24 may include solely first exemplary chain-link modules 26A, solely second exemplary chain-link modules 26B, or a combination of first and second exemplary chain-link modules 26A, 26B.

In any event, the provision of a plurality of chain-link modules 26A, 26B means that it is possible to build up a combined voltage across each chain-link converter 24, via the insertion of the energy storage devices, i.e. the capacitors 32, of multiple chain-link modules 26A, 26B (with each chain-link module 26A, 26B providing its own voltage), which is higher than the voltage available from each individual chain-link module 26A, 26B.

Accordingly, each of the chain-link modules 26A, 26B work together to permit the chain-link converter 24 to provide a stepped variable voltage source. This permits the generation of a voltage waveform across each chain-link converter 24 using a stepwise approximation. As such each chain-link converter is capable of providing a wide range of complex waveforms.

For example, operation of each chain-link converter 24 in the foregoing manner can be used to generate an AC voltage waveform at the AC terminal 22, and thereby enable the voltage source converter 10 to provide the aforementioned power transfer functionality between the AC and DC networks.

According to a first aspect of the invention, there is provided a module for a voltage source converter, the module comprising:
an energy storage limb including a plurality of series-connected energy storage devices;
a switching limb connected in parallel with the energy storage limb, the switching limb including first and second series-connected module switching element groups, the first module switching element group including a plurality of first module switching elements, the second module switching element group including a plurality of second module switching elements, a first intermediate point of the plurality of first module switching elements defining a first connection terminal, a second intermediate point of the plurality of second module switching elements defining a second connection terminal, the module switching elements and the energy storage devices arranged to be combinable to selectively provide a voltage source to the first and second connection terminals;
a first junction separating the plurality of series-connected energy storage devices, a second junction separating the first and second series-connected module switching element groups; and
an energy dissipation or absorption limb operably connected between the first and second junctions, the energy dissipation or absorption limb including at least one energy dissipation or absorption element, wherein the module switching elements are configurable to selectively direct a module current to flow through the energy dissipation or absorption limb.

The selective provision of a voltage source to the first and second connection terminals enables the module to be used in power conversion and transfer, amongst other power-related applications. By operably connecting the energy dissipation or absorption limb between the first and second junctions, the module switching elements can be readily configured to form a current path passing through the energy dissipation or absorption limb in a way that has negligible impact on the normal current paths used to selectively provide a voltage source to the first and second connection terminals. By selectively diverting the module current through the energy dissipation or absorption limb, it becomes possible to use the or each energy dissipation or absorption element to dissipate or absorb energy in the module, e.g. from one or more of the energy storage devices. This may be used to reduce excess energy in the module that might otherwise lead to a situation that damages, or causes failure of, module components (such as the module switching elements) or any external circuit/device operably connected to the module.

It will be appreciated that the diversion of the module current through the energy dissipation or absorption limb may take place during a normal or abnormal operating state of the module. The invention is particularly applicable to a module current that is a transient or fault current.

In the absence of the energy dissipation or absorption limb, the first and second junctions would be directly connected, thus resulting in a current path that is incapable of dissipating or absorbing excess energy in the module. This increases a risk of damage or failure for the module components and any associated external circuit/device.

The topology of the invention therefore provides the module with an integrated protective device with current and/or voltage limitation capability.

It will be appreciated that each module switching element may be actively configured (such as controlled turn-on or turn-off of the module switching element) or passively configured (such as no change in switching state of the module switching element or a failure of the module switching element) to direct the module current to flow through the energy dissipation or absorption limb.

In embodiments of the invention, the module switching elements may be configurable to selectively direct a module current to temporarily flow through the energy dissipation or absorption limb between different switching states of the module. Such configuration of the module switching elements to direct the flow of the module current may take place through, for example, a deliberately controlled timing of the switching of the switching elements or unintentional timing errors during a transition of the module between the different switching states.

In further embodiments of the invention, the module current may be directed to flow through the energy dissipation or absorption limb when the module switching elements are configured to form a short-circuit across at least one of the energy storage devices.

The formation of the short circuit across at least one of the energy storage devices exposes one or more of the module switching elements to a potentially detrimental high shoot-through current. By directing the module current to flow through the energy dissipation or absorption limb, the shoot-through current can be limited to a safe level that protects the or each exposed module switching element from damage or failure.

The topology of the invention permits automatic configuration of the module switching elements to divert the module current to flow through the energy dissipation or absorption limb, thus limiting or obviating the need for constant monitoring of the health of the module switching elements.

The topology of the invention beneficially enables automatic diversion of the module current to flow through the energy dissipation or absorption limb in the event of an unexpected condition or failure of one or more module switching elements. Exemplarily, the module switching elements may be configured to form the short-circuit across at least one of the energy storage devices in response to at least one of the module switching elements having failed to a short-circuit state. Further exemplarily, the module switching elements may be configured to form the short-circuit across at least one of the energy storage devices in response to at least one of the module switching elements having failed to turn off after reaching a desaturated state.

In still further embodiments of the invention, the module may include a bypass limb connected across the first and second connection terminals, the bypass limb operable to selectively permit and block a flow of current therethrough. The module current may be directed to flow through the bypass limb and the energy dissipation or absorption limb when the bypass limb is configured to permit a flow of current therethrough and the module switching elements are configured to form the short-circuit across at least one of the energy storage devices. Preferably the bypass limb includes at least one bypass switching element controllable to selectively close to form a bypass current path that permits the flow of current therethrough and open to block the flow of current therethrough.

The module of the invention may include a module controller configured, e.g. programmed, to selectively control the switching of the module switching elements so that the module switching elements are configured to direct the module current to flow through the energy dissipation or absorption limb. This enables active turn-on and turn-off of the module switching elements to control the selective diversion of the module current through the energy dissipation or absorption limb.

Optionally the module controller may be configured to selectively control the switching of the module switching elements in a voltage regulation mode so that the module current is used to regulate a voltage of at least one of the energy storage devices and so that the module switching elements are configured to direct the module current to flow through the energy dissipation or absorption limb during the voltage regulation mode. The operational efficiency of the module is improved through combination of the voltage regulation mode and the diversion of the module current through the energy dissipation or absorption limb. It will be appreciated that the duration of the voltage regulation mode may overlap fully or partially with the duration of the diversion of the module current through the energy dissipation or absorption limb.

Further optionally the module controller may be configured to selectively control a timing of the switching of the module switching elements so that the module switching elements are configured to temporarily direct the module current to flow through the energy dissipation or absorption limb between different switching states of the module. This permits controlled diversion of the module current through the energy dissipation or absorption limb during the operation of the module.

The or each energy dissipation or absorption element preferably has a current limiting property and/or a voltage limiting property. For example, the or each energy dissipation or absorption element may be, but is not limited to, a linear resistive element, a non-linear resistive element or a snubber.

The module of the invention may be a chain-link module, for connection in series with one or more other chain-link modules to form a chain-link converter selectively operable to provide a stepped variable voltage source within a voltage source converter.

According to a second aspect of the invention, there is provided a voltage source converter comprising at least one module according to any one of the first aspect of the invention and its embodiments.

The features and advantages of the module of the first aspect of the invention and its embodiments apply mutatis mutandis to the features and advantages of the voltage source converter of the second aspect of the invention and its embodiments.

The configuration of the voltage source converter may vary so long as it includes at least one module according to any one of the first aspect of the invention and its embodiments. For example, the voltage source converter may include at least one chain-link converter having a plurality of series-connected chain-link modules, at least one of the chain-link modules being a chain-link module of the invention, as described hereinabove.

According to a third aspect of the invention, there is provided a method of operating a module for a voltage source converter, the module comprising:
an energy storage limb including a plurality of series-connected energy storage devices;
a switching limb connected in parallel with the energy storage limb, the switching limb including first and second series-connected module switching element groups, the first module switching element group including a plurality of first module switching elements, the second module switching element group including a plurality of second module switching elements, a first intermediate point of the plurality of first module switching elements defining a first connection terminal, a second intermediate point of the plurality of second module switching elements defining a second connection terminal, the module switching elements and the energy storage devices arranged to be combinable to selectively provide a voltage source to the first and second connection terminals;
a first junction separating the plurality of series-connected energy storage devices, a second junction separating the first and second series-connected module switching element groups; and
an energy dissipation or absorption limb operably connected between the first and second junctions, the energy dissipation or absorption limb including at least one energy dissipation or absorption element,
wherein the method comprises the step of configuring the module switching elements to selectively direct a module current to flow through the energy dissipation or absorption limb.

The features and advantages of the module of the first aspect of the invention and its embodiments apply mutatis mutandis to the features and advantages of the method of the third aspect of the invention and its embodiments.

In the method of the invention, the module may be a transient or fault current.

In embodiments of the invention, the method may include the step of configuring the module switching elements to selectively direct a module current to temporarily flow through the energy dissipation or absorption limb between different switching states of the module.

In further embodiments of the invention, the method may include the step of configuring the module switching elements to form a short-circuit across at least one of the energy storage devices to direct the module current to flow through the energy dissipation or absorption limb.

In such embodiments, the method may include the step of configuring the module switching elements to form the short-circuit across at least one of the energy storage devices in response to at least one of the module switching elements having failed to a short-circuit state.

In further such embodiments, the method may include the step of configuring the module switching elements to form the short-circuit across at least one of the energy storage devices in response to at least one of the module switching elements having failed to turn off after reaching a desaturated state.

In the method of the invention, the module may include a bypass limb connected across the first and second connection terminals, the bypass limb operable to selectively permit and block a flow of current therethrough. The method may include the step of configuring the bypass limb to permit a flow of current therethrough and configuring the module switching elements to form the short-circuit across at least one of the energy storage devices to direct the module current to flow through the bypass limb and the energy dissipation or absorption limb.

The method may include the step of selectively controlling the switching of the module switching elements so that the module switching elements are configured to direct the module current to flow through the energy dissipation or absorption limb.

Optionally the method may include the step of selectively controlling the switching of the module switching elements in a voltage regulation mode so as to use the module current to regulate a voltage of at least one of the energy storage devices and so as to configure the module switching elements to direct the module current to flow through the energy dissipation or absorption limb during the voltage regulation mode.

Further optionally the method may include the step of selectively controlling a timing of the switching of the module switching elements so as to configure the module switching elements to temporarily direct the module current to flow through the energy dissipation or absorption limb between different switching states of the module.

In the method of the invention, the or each energy dissipation or absorption element may be, but is not limited to, a linear resistive element, a non-linear resistive element or a snubber.

In the method of the invention, the module may be a chain-link module, for connection in series with one or more other chain-link modules to form a chain-link converter selectively operable to provide a stepped variable voltage source within a voltage source converter.

According to a fourth aspect of the invention, there is provided a method of operating a voltage source converter that comprises at least one module, the method comprising the step of operating a module in accordance with any one of the third aspect of the invention and its embodiments.

The features and advantages of the first, second and third aspects of the invention and their embodiments apply mutatis mutandis to the features and advantages of the method of the fourth aspect of the invention and its embodiments.

In the method of the invention, the voltage source converter may include at least one chain-link converter having a plurality of series-connected chain-link modules, at least one of the chain-link modules being a chain-link module of the invention, as described hereinabove.

It will be appreciated that the use of the terms "first" and "second", and the like, in this patent specification is merely intended to help distinguish between similar features (e.g. the first and second series-connected module switching element groups, the first and second module switching elements, the first and second intermediate points, the first and second connection terminals, the first and second junctions, etc.), and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Preferred embodiments of the invention will now be described, by way of non-limiting examples, with reference to the accompanying drawings in which:
Figure 1 shows a known voltage source converter;
Figure 2(a) shows a schematic view of a first exemplary chain-link module which optionally may form a part of the known voltage source converter;
Figure 2(b) shows a schematic view of a second exemplary chain-link module which optionally may form a part of the known voltage source converter;
Figure 3 shows a chain-link module according to a first embodiment of the invention;
Figures 4 and 5 illustrate current paths of a module current during operation of the chain-link module of Figure 3;
Figure 6 shows a third exemplary chain-link module not forming part of the invention; and
Figures 7 and 8 illustrate current paths of a module current during operation of the chain-link module of Figure 6; and
Figure 9 shows a chain-link module according to a second embodiment of the invention.

The figures are not necessarily to scale, and certain features and certain views of the figures may be shown exaggerated in scale or in schematic form in the interests of clarity and conciseness.

The following embodiments of the invention are described with reference to a chain-link module for use in a voltage source converter. It will be appreciated that the following embodiments of the invention are applicable mutatis mutandis to a non-chain-link module for use in a voltage source converter.

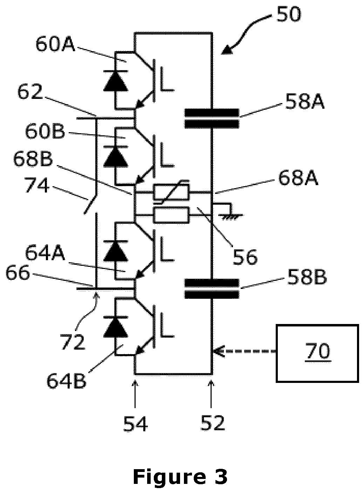

A chain-link module according to a first embodiment of the invention is designated generally by reference numeral 50, as shown in Figure 3.

The chain-link module 50 is for connection in series with other chain-link modules to form a chain-link converter (not shown) that is operable to provide a stepped variable voltage source within a voltage source converter, in a manner known in the art. The said other chain-link modules, with which the chain-link module 50 may be connected in series, may be one or more identical chain-link modules 50, one or more conventional half-bridge or full bridge chain-link modules 26A, 26B generally as shown in Figures 2(a) and 2(b), one or more other chain-link modules comprising at least one switching element and at least one energy storage device that are arranged to be combinable to selectively provide a voltage source, or any combination thereof.

The chain-link module 50 includes an energy storage limb 52, a switching limb 54 and an energy dissipation or absorption limb 56.

The energy storage limb 52 includes a pair of series-connected energy storage devices that are in the form of a first capacitor 58A and a second capacitor 58B.

The switching limb includes first and second series-connected module switching element groups. The first module switching element group includes a pair of first series-connected module switching elements 60A,60B, with a first intermediate point between the pair of first module switching elements 60A,60B defining a first connection terminal 62. The second module switching element group includes a pair of series-connected second module switching elements 64A,64B, with a second intermediate point between the pair of second module switching elements 64A,64B defining a second connection terminal 66.

Each first module switching element 62A,62B includes a first semiconductor device, in the form of a first IGBT, which is connected in parallel with a first anti-parallel diode, while each second module switching element 64A,64B includes a second semiconductor device, in the form of a second IGBT, which is connected in parallel with a second anti-parallel diode. In other embodiments of the invention, however, different forms of semiconductor device and/or passive current check element may be used.

The chain-link module 50 further includes first and second junctions 68A,68B.

A first end of the energy storage limb 52 is connected to a first end of the switching limb 54. A second end of the energy storage limb 52 is connected to a second end of the switching limb 54. In this way the energy storage limb 52 is connected in parallel with the switching limb 54.

The first capacitor 58A is located at the first end of the energy storage limb 52. The second capacitor 58B is located at the second, opposite end of the energy storage limb 52. The first junction 68A separates the pair of capacitors 58A,58B. In the embodiment shown, the first junction 68A is exemplarily connected to ground.

The first module switching element group is located at the first end of the switching limb 54. The second module switching element group is located at the second, opposite end of the switching limb 54. The second junction 68B separates the first and second module switching element groups. Specifically, the first module switching element 60A is arranged at the first end of the switching limb 54, the first module switching element 60B and the second module switching element 64A are arranged on respective sides of the second junction 68B, and the second module switching element 64B is arranged at the second end of the switching limb 54.

The energy dissipation or absorption limb 56 is operably connected between the first and second junctions 68A,68B. The energy dissipation or absorption limb 56 includes a linear resistor and a metal-oxide varistor (MOV) that are connected in parallel. It is envisaged that, in other embodiments of the invention, the MOV may be replaced by a different type of non-linear resistor. It is also envisaged that, in further other embodiments of the invention, the energy dissipation or absorption limb 56 may include a single linear or non-linear resistor. It is further envisaged that, in still further other embodiments of the invention, the energy dissipation or absorption limb 56 may include any combination or arrangement of a plurality of resistors.

The chain-link module 50 includes a module controller 70 that is configured, e.g. programmed, to selectively control the switching of the module switching elements 60A,60B,64A,64B.

For the purposes of simplicity, the module controller 70 is exemplarily described with reference to its implementation as a single control unit. In other embodiments, the module controller 70 may be implemented as a plurality of control units, each of which is for controlling a respective one of the module switching elements 60A,60B,64A,64B. The module controller 70 may be internal to, or external of, the chain-link module 50. Alternatively, the module controller 70 may include a combination of one or more control units internal to the chain-link module 50 and one or more control units external of the chain-link module 50. Each control unit may be configured to communicate with at least one other control unit via telecommunications links.

The configuration of the module controller 70 may vary depending on specific requirements of the voltage source converter. For example, the module controller 70 form part of a plurality of module controllers, each of which is for controlling a respective one of the plurality of chain-link modules, or may be configured as a single module controller to selectively control the switching of the module switching elements of the plurality of chain-link modules. Each module controller may be configured to communicate with at least one other module controller via telecommunications links.

The chain-link module 50 further includes a bypass limb 72, having a bypass switch 74, connected across the first and second connection terminals 62,66. The bypass switch 74 is controllable to close to form a bypass current path that permits the flow of current therethrough and open to block the flow of current therethrough. Other forms of a bypass element may be used in addition to or in place of the bypass switch 74 provided that they also afford the chain-link module 50 with a desired degree of electrical protection. Meanwhile the bypass switch 74 preferably can be activated, as needed, by either the module controller 70 or a separate trip assembly (not shown). In any event, however, preferably the bypass switch 74 is controlled by the module controller 70.

The provision of the bypass limb 72 in the chain-link module 50 enables operation of the chain-link converter to continue when the chain-link module 50 has failed and is bypassed, especially if the chain-link modules in the chain-link converter are sufficient in number to provide some level of redundancy.

It will be appreciated that the bypass limb 72 is an optional feature of the chain-link module 50.

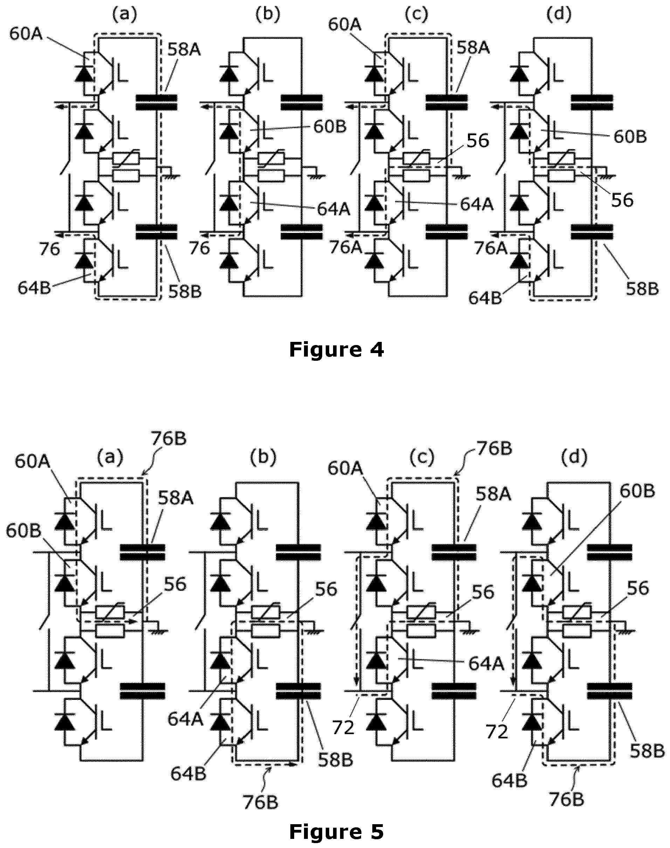

Operation of the chain-link module 50 of Figure 3 is described as follows with reference to Figures 4 and 5.

The chain-link module 50 may be used to selectively provide a voltage source to the first and second connection terminals 62,66 as part of the chain-link converter's operation to provide a stepped variable voltage source within the voltage source converter.

To configure the chain-link module 50 to provide a non-zero voltage to the connection terminals 62,66, switching states of the module switching elements 60A,60B,64A,64B are configured so that a module current 76 flows through the module switching elements 60A,64B and the capacitors 58A,58B, as shown in Figure 4(a). To configure the chain-link module 50 to provide a zero voltage to the connection terminals 62,66, the switching states of the module switching elements 60A,60B,64A,64B are configured so that the module current 76 flows through the module switching elements 60B,64A, bypassing the capacitors 58A,58B, as shown in Figure 4(b). Meanwhile the module current 76 does not pass through the energy dissipation or absorption limb 56, thus missing the impact of the energy dissipation or absorption limb 56 on the selective provision of the voltage source to the connection terminals 62,66.

There are a number of circumstances in which the module switching elements 60A,60B,64A,64B are configured to direct the module current 76 to flow through the energy dissipation or absorption limb 56, non-limiting examples of which are set out as follows.

The module current 76 may take the form of a transient module current 76A that flows through a transient current path that passes through:
- the module switching elements 60A,64A and the first capacitor 58A, as shown in Figure 4(c); or
- the module switching elements 60B,64B and the second capacitor 58B, as shown in Figure 4(d).

Such transient module current flow may take place in the event of timing errors in switching signals sent from the module controller 70 to the module switching elements 60A,60B,64A,64B when transitioning between the non-zero and zero voltage states of the chain-link module 50 or in the event of imbalanced diode recovery currents.

Such transient module current flow may also take place in the event of the module controller 70 intentionally introducing a timing skew in switching signals sent from the module controller 70 to the module switching elements 60A,60B,64A,64B to carry out a voltage regulation mode. In the voltage regulation mode, the module current 76 is controlled to selectively flow through each capacitor 58A,58B in order to regulate the voltage of each capacitor 58A,58B within a desired voltage threshold. Preferably the voltage regulation mode is a voltage balancing mode in which the module current 76 is used to rebalance the voltages of the capacitors 58A,58B. The voltage regulation mode may take place during a given switching state of the chain-link module 50 or between switching states of the chain-link module 50.

In the circumstances illustrated in Figures 4(c) and 4(d), the transient module current 76A is directed to flow through the energy dissipation or absorption limb 56. The flow of the transient module current 76A through the energy dissipation or absorption limb 56 enables the resistor and MOV to dissipate any excess energy in the chain-link module 50 and thereby limit the transient module current 76A in order to protect the module switching elements 60A,60B,64A,64B or any associated external circuit/device that are exposed to the transient module current 76A.

The module current 76 may take the form of a fault module current 76B that flows through a fault current path that passes through:
- the first module switching elements 60A,60B and the first capacitor 58A, as shown in Figure 5(a); or
- the second module switching elements 64A,64B and the second capacitor 58B, as shown in Figure 5(b); or
- the module switching elements 60A,64A, the first capacitor 58A and the closed bypass limb 72, as shown in Figure 5(c); or
- the module switching elements 60B,64B, the second capacitor 58B and the closed bypass limb 72, as shown in Figure 5(d).

In the circumstances illustrated in Figures 5(a), 5(b), 5(c) and 5(d), the fault module current 76B is directed to flow through the energy dissipation or absorption limb 56.

In the circumstances illustrated in Figures 5(a) and 5(b), the fault current path may arise during unexpected simultaneous conduction of module switching elements 60A,60B,64A,64B that result in a formation of a short circuit across the respective capacitor 58A, 58B.

A typical formation of the short circuit across a given capacitor 58A, 58B involves one module switching element 60A,60B,64A,64B of a given module switching element group having failed to a short-circuit state and the other healthy module switching element 60A,60B,64A,64B in the same module switching element group being turned on intentionally. Upon turn-on, the healthy module switching element 60A,60B,64A,64B desaturates due to the flow of the fault module current 76B. Normally the module controller 70 detects the desaturation of the healthy module switching element 60A,60B,64A,64B and then turns off the healthy module switching element 60A,60B,64A,64B. Successful turn-off of the healthy module switching element 60A,60B,64A,64B has the effect of limiting the fault module current 76B. However, in the event of unsuccessful turn-off of the healthy module switching element 60A,60B,64A,64B, the exposure of the module switching elements 60A,60B,64A,64B to the high shoot-through fault module current 76B may result in rupture of the module switching elements 60A,60B,64A,64B.

Directing the fault module current 76B to flow through the energy dissipation or absorption limb 56 enables the resistor and MOV to dissipate any excess energy from the respective capacitor 58A, 58B, thereby diverting a substantial amount of the capacitor's energy away from the respective module switching element group, and thereby limit the fault module current 76B in order to protect the module switching elements 60A,60B,64A,64B that are exposed to the fault module current 76B. The fault module current 76 may be limited to a safe level that either prevents rupture of the exposed module switching elements 60A,60B,64A,64B or at least considerably reduces the explosion energy resulting from the rupture to make it simpler and cheaper to contain the fault.

In the circumstances illustrated in Figures 5(c) and 5(d), the fault current path may arise during closure of the bypass limb 72 and one or more module switching elements 60A,60B,64A,64B having failed to a short-circuit state that results in a formation of a short circuit across a capacitor 58A, 58B. In addition to exposing the module switching elements 60A,60B,64A,64B to a high shoot-through fault module current 76B, the short circuit also exposes the bypass switch 74 to a risk of damage or failure that adversely affects its current-carrying capacity and thereby prevents the bypass limb 72 from carrying out its protective function properly.

Directing the fault module current 76B to flow through the energy dissipation or absorption limb 56 enables the resistor and MOV to dissipate any excess energy from the respective capacitor 58A, 58B, thereby diverting a substantial amount of the capacitor's energy away from the exposed module switching elements 60A,60B,64A,64B, and thereby limit the fault module current 76B in order to protect the module switching elements 60A,60B,64A,64B and the bypass switch 74 that are exposed to the fault module current 76B. The fault module current 76B may be limited to a safe level that either prevents rupture of the exposed module switching elements 60A,60B,64A,64B and bypass switch 74 or at least considerably reduces the explosion energy resulting from the rupture to make it simpler and cheaper to contain the fault.

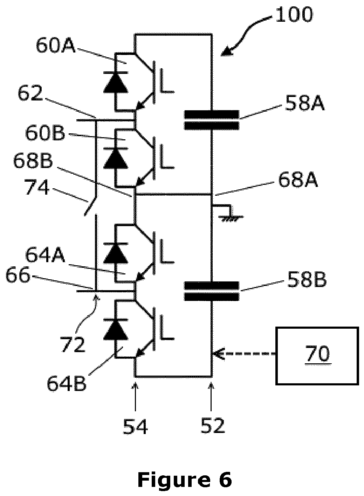

Figure 6 shows a third exemplary chain-link module 100 that does not form part of the invention. The exemplary chain-link module 100 of Figure 6 is similar in structure and operation to the chain-link module 50 of Figure 1 and like features share the same reference numerals.

The exemplary chain-link module 100 of Figure 6 differs from the chain-link module 50 of Figure 1 in that the exemplary chain-link module 100 of Figure 6 omits the energy dissipation or absorption limb 56. Instead, the first and second junctions 68A,68B are directly connected to each other.

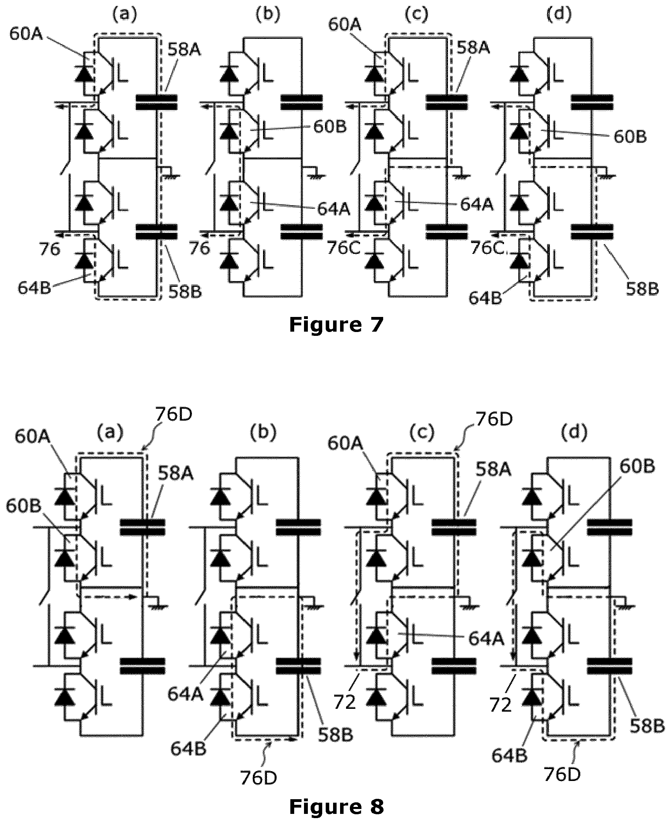

Similarly to the chain-link module 50 of Figure 1, the exemplary chain-link module 100 may be used to selectively provide a voltage source to the first and second connection terminals 62,66, as shown in Figures 7(a) and 7(b).

The module current 76 in the exemplary chain-link module 100 may take the form of a transient module current 76C that flows through a transient current path that passes through:
- the module switching elements 60A,64A and the first capacitor 58A, as shown in Figure 7(c); or
- the module switching elements 60B,64B and the second capacitor 58B, as shown in Figure 7(d).

The module current 76 may take the form of a fault module current 76D that flows through a fault current path that passes through:
- the first module switching elements 60A,60B and the first capacitor 58A, as shown in Figure 8(a); or
- the second module switching elements 64A,64B and the second capacitor 58B, as shown in Figure 8(b); or
- the module switching elements 60A,64A, the first capacitor 58A and the closed bypass limb 72, as shown in Figure 8(c); or
- the module switching elements 60B,64B, the second capacitor 58B and the closed bypass limb 72, as shown in Figure 8(d).

In the circumstances illustrated in Figures 7(c), 7(d), 8(a), 8(b), 8(c) and 8(d), the transient or fault module current 76C,76D is directed to flow through the direct connection between the first and second junctions 68A,68B. The absence of the energy dissipation or absorption limb 56 renders the exemplary chain-link module 100 incapable of dissipating any excess energy therein in order to limit the transient or fault module current 76C,76D. Consequently the module switching elements 60A,60B,64A,64B, the bypass switch 74 and any associated external circuit/device are at higher risk of damage or failure due to exposure to the transient or fault module current 76C,76D.

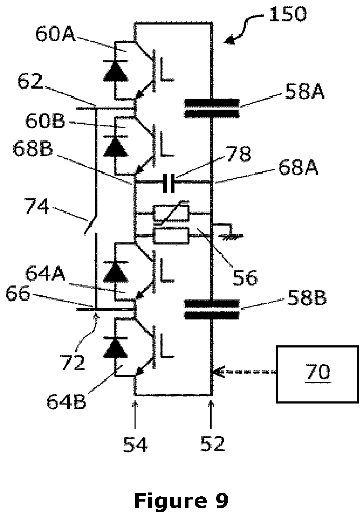

A chain-link module according to a second embodiment of the invention is designated generally by reference numeral 150, as shown in Figure 9. The chain-link module 150 of Figure 9 is similar in structure and operation to the chain-link module 50 of Figure 1 and like features share the same reference numerals.

The chain-link module 150 of Figure 9 differs from the chain-link module 50 of Figure 1 in that the energy dissipation or absorption limb 56 further includes a snubber capacitor 78 connected in parallel with the resistor and MOV. The purpose of the snubber capacitor 78 is to provide high-frequency decoupling during the operation of the chain-link module 150. It is envisaged that, in other embodiments of the invention, the snubber capacitor 78 may be replaced by a plurality of snubber capacitors.

A voltage source converter according to a third embodiment of the invention (not shown) comprises at least one chain-link converter having a plurality of series-connected chain-link modules, at least one of the said chain-link modules being a chain-link module 50,150, as described hereinabove.

The listing or discussion of apparently prior-published document or information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A module (50,150) for a voltage source converter, the module (50,150) comprising:
an energy storage limb (52) including a plurality of series-connected energy storage devices (58A,58B);
a switching limb (54) connected in parallel with the energy storage limb (52), the switching limb (54) including first and second series-connected module switching element groups, the first module switching element group including a plurality of first module switching elements (60A,60B), the second module switching element group including a plurality of second module switching elements (64A,64B), a first intermediate point of the plurality of first module switching elements (60A,60B) defining a first connection terminal (62), a second intermediate point of the plurality of second module switching elements (64A,64B) defining a second connection terminal (66), the module switching elements (60A,60B,64A,64B) and the energy storage devices (58A,58B) arranged to be combinable to selectively provide a voltage source to the first and second connection terminals (62,66);
a first junction (68A) separating the plurality of series-connected energy storage devices (58A,58B), a second junction (68B) separating the first and second series-connected module switching element groups; and
an energy dissipation or absorption limb (56) operably connected between the first and second junctions (68A,68B), the energy dissipation or absorption limb (56) including at least one energy dissipation or absorption element, wherein the module switching elements (60A,60B,64A,64B) are configurable to selectively direct a module current (76) to flow through the energy dissipation or absorption limb (56).

2. A module (50,150) according to Claim 1 wherein the module current (76) is a transient or fault current (76A,76B).

3. A module (50,150) according to Claim 1 or Claim 2 wherein the module switching elements (60A,60B,64A,64B) are configurable to selectively direct a module current (76) to temporarily flow through the energy dissipation or absorption limb (56) between different switching states of the module (50,150).

4. A module (50,150) according to any one of the preceding claims wherein the module current (76) is directed to flow through the energy dissipation or absorption limb (56) when the module switching elements (60A,60B,64A,64B) are configured to form a short-circuit across at least one of the energy storage devices (58A,58B).

5. A module (50,150) according to Claim 4 wherein the module switching elements (60A,60B,64A,64B) are configured to form the short-circuit across at least one of the energy storage devices (58A,58B) in response to at least one of the module switching elements (60A,60B,64A,64B) having failed to a short-circuit state.

6. A module (50,150) according to Claim 4 or Claim 5 wherein the module switching elements (60A,60B,64A,64B) are configured to form the short-circuit across at least one of the energy storage devices (58A,58B) in response to at least one of the module switching elements (60A,60B,64A,64B) having failed to turn off after reaching a desaturated state.

7. A module (50,150) according to any one of Claims 4 to 6 including a bypass limb (72) connected across the first and second connection terminals (62,66), the bypass limb (72) operable to selectively permit and block a flow of current therethrough, wherein the module current (76) is directed to flow through the bypass limb and the energy dissipation or absorption limb (56) when the bypass limb (72) is configured to permit a flow of current therethrough and the module switching elements (60A,60B,64A,64B) are configured to form the short-circuit across at least one of the energy storage devices (58A,58B).

8. A module (50,150) according to any one of the preceding claims including a module controller (70) configured to selectively control the switching of the module switching elements (60A,60B,64A,64B) so that the module switching elements (60A,60B,64A,64B) are configured to direct the module current (76) to flow through the energy dissipation or absorption limb (56).

9. A module (50,150) according to Claim 8 wherein the module controller (70) is configured to selectively control the switching of the module switching elements (60A,60B,64A,64B) in a voltage regulation mode so that the module current (76) is used to regulate a voltage of at least one of the energy storage devices (58A,58B) and so that the module switching elements (60A,60B,64A,64B) are configured to direct the module current (76) to flow through the energy dissipation or absorption limb (56) during the voltage regulation mode.

10. A module (50,150) according to Claim 8 or Claim 9 wherein the module controller (70) is configured to selectively control a timing of the switching of the module switching elements (60A,60B,64A,64B) so that the module switching elements (60A,60B,64A,64B) are configured to temporarily direct the module current (76) to flow through the energy dissipation or absorption limb (56) between different switching states of the module (50,150).

11. A module (50,150) according to any one of the preceding claims wherein the or each energy dissipation or absorption element is a linear resistive element, a non-linear resistive element or a snubber.

12. A module (50,150) according to any one of the preceding claims wherein the module (50,150) is a chain-link module (50,150), for connection in series with one or more other chain-link modules to form a chain-link converter selectively operable to provide a stepped variable voltage source within a voltage source converter.

13. A voltage source converter comprising at least one module (50,150) according to any one of the preceding claims.

14. A voltage source converter according to Claim 13 including at least one chain-link converter having a plurality of series-connected chain-link modules, at least one of the chain-link modules being a chain-link module (50,150) according to Claim 12.

15. A method of operating a module (50,150) for a voltage source converter, the module (50,150) comprising:
an energy storage limb (52) including a plurality of series-connected energy storage devices (58A,58B);
a switching limb (54) connected in parallel with the energy storage limb (52), the switching limb (54) including first and second series-connected module switching element groups, the first module switching element group including a plurality of first module switching elements (60A,60B), the second module switching element group including a plurality of second module switching elements (64A,64B), a first intermediate point of the plurality of first module switching elements (60A,60B) defining a first connection terminal (62), a second intermediate point of the plurality of second module switching elements (64A,64B) defining a second connection terminal (66), the module switching elements (60A,60B,64A,64B) and the energy storage devices (58A,58B) arranged to be combinable to selectively provide a voltage source to the first and second connection terminals (62,66);
a first junction (68A) separating the plurality of series-connected energy storage devices (58A,58B), a second junction (68B) separating the first and second series-connected module switching element groups; and
an energy dissipation or absorption limb (56) operably connected between the first and second junctions (68A,68B), the energy dissipation or absorption limb (56) including at least one energy dissipation or absorption element,
wherein the method comprises the step of configuring the module switching elements (60A,60B,64A,64B) to selectively direct a module current (76) to flow through the energy dissipation or absorption limb (56).
